(19) Europäisches Patentamt
European Patent Office
Office européen des brevets

(11) Publication number: **0 474 179 B1**

# EUROPEAN PATENT SPECIFICATION

(45) Date of publication of patent specification: **05.07.95**

(51) Int. Cl.⁶: **C08L 51/04**, //(C08L51/04, 67:00,69:00)

(21) Application number: **91114824.5**

(22) Date of filing: **03.09.91**

(54) Thermoplastic resin composition.

(30) Priority: **03.09.90 JP 232661/90**

(43) Date of publication of application:
**11.03.92 Bulletin 92/11**

(45) Publication of the grant of the patent:
**05.07.95 Bulletin 95/27**

(84) Designated Contracting States:
**DE GB NL**

(56) References cited:
**EP-A- 0 287 207**
**EP-A- 0 310 123**

(73) Proprietor: **JAPAN SYNTHETIC RUBBER CO., LTD.**
**11-24, Tsukiji-2-chome**
**Chuo-ku**
**Tokyo 104 (JP)**

(72) Inventor: **Noro, Masahiko, c/o Japan Synthetic Rubber**
**Co., Ltd.,**
**2-11-24, Tsukiji,**
**Chuo-ku**
**Tokyo (JP)**
Inventor: **Mitsui, Munehiro, c/o Japan Synthetic Rubber**
**Co., Ltd.,**
**2-11-24, Tsukiji,**
**Chuo-ku**
**Tokyo (JP)**
Inventor: **Nakazawa, Kazuyoshi, c/o Japan Synthetic Rubber**
**Co., Ltd.,**
**2-11-24, Tsukiji,**
**Chuo-ku**
**Tokyo (JP)**
Inventor: **Furuyama, Tateki, c/o Japan Synthetic Rubber**
**Co., Ltd.,**
**2-11-24, Tsukiji,**
**Chuo-ku**
**Tokyo (JP)**

(74) Representative: **Wächtershäuser, Günter, Prof. Dr.**
**Patentanwalt,**
**Tal 29**
**D-80331 München (DE)**

## Description

Field of the Invention:

The present invention relates to a thermoplastic resin composition comprising a major amount of a rubber-modified styrene thermoplastic resin, a small amount of an aromatic polyester with a specific intrinsic viscosity, and a small amount of an aromatic polycarbonate. The thermoplastic resin composition possesses a high impact resistance and provides a painted surface with a superior appearance when a paint is applied on its surface.

Description of the Background Art:

EP-A-0 310 123 discloses $\alpha$-methyl styrene containing thermoplastic resin compositions.

A rubber modified styrene thermoplastic resin is light in weight and can excellently be processed or molded. A secondary processing such as painting and galvanization can easily be applied to the molded surface. Because of these reasons, the resin is abundantly used for bodies or chassis of automobiles. A rubber modified styrene thermoplastic resin, however, is unstable against organic solvents used for paints and produces deficiencies on the painted surfaces after finishing, such as crazing and very fine cracks leading to lack of glossiness, due to residual stresses created during the molding.

A method known in the art to solve the problem and to improve the external appearance of the painted surfaces is to use a large amount of monomers having polar groups, e.g. cyano compounds, for producing rubber modified styrene thermoplastic resins. Even though the method can improve the external appearance of the painted surfaces, moldability, processability, and molding heat stability of the resin are greatly impaired. Adhesion of the painted film to the substrate also decreases.

Thus, the improvement in external appearances of the painted surfaces involved the problem of worsening the intrinsic properties of the resin, such as superior moldability, processability and heat stability. They are inherently incompatible with each other. Conventional technologies could not find an adequate solution to the problem.

The present inventors have undertaken extensive studies in order to solve this problem, and found that incorporation of a small amount of aromatic polyester with a specific intrinsic viscosity and an aromatic polycarbonate could improve both the painted surface appearance and the impact resistance of a rubber modified styrene thermoplastic resin.

## SUMMARY OF THE INVENTION

This invention provides a thermoplastic resin composition comprising:
(A) 75 to 99.8% by weight of a rubber-modified styrene thermoplastic resin,
(B) 0.1 to 15% by weight of an aromatic polyester having an intrinsic viscosity in the range of 0.2 to 1.5 dl/g, and
(C) 0.1 to 10% by weight of an aromatic polycarbonate, the composition containing no $\alpha$-methylstyrene or less than 10% by weight of $\alpha$-methylstyrene based on the amount of said rubber-modified styrene thermoplastic resin.

Other and further objects, features and advantages of the invention will appear more fully from the following description.

## DETAILED DESCRIPTION OF THE INVENTION AND PREFERRED EMBODIMENTS

(A) Rubber-modified styrene thermoplastic resin:

Component (A) used in the present invention is (1) a rubber-modified styrene polymer or (2) a mixture of a rubber-modified styrene polymer and a styrene polymer which is not rubber-modified. They are prepared by incorporating a rubbery polymer into a specific type of styrene polymer in order to provide the latter with high impact resistance.

Simple mechanical blending may be employed for the incorporation of a rubbery polymer into styrene polymer. The use of a graft copolymer is more desirable in order to obtain a better mutual solubility of the components. Such a graft copolymer is prepared by graft-copolymerizing a rubbery polymer with an aromatic vinyl compound, or with a mixture of an aromatic vinyl compound and other type of vinyl compound. The product obtained by a graft-blending method, in which a graft-polymerized rubber-modified styrene polymer is blended with a styrene-containing polymer which has been separately prepared, can also be used.

Rubber-type polymers which can be used in this invention include polybutadiene, styrene-butadiene copolymer, acryl-containing copolymer, ethylene-propylene copolymer, chlorinated polyethylene and polyurethane. Among these, an especially preferable rubbery polymer is polybutadiene.

It is desirable that at least 50%, more preferably at least 70%, of the particles of the rubber components in the rubber-modified styrene thermoplastic resin have a particle size in the range of 1,200-2,500 angstroms. The products with rubber components with this particle size range exhibit especially outstanding painting performance and impact resistance.

Given as examples of aromatic vinyl compounds are styrene, bromostyrene, p-methylstyrene and $\alpha$-methylstyrene. Among these, a preferable aromatic vinyl compound is styrene. $\alpha$-Methylstyrene can be used, but use of $\alpha$-methylstyrene according to the present invention is limited to less than 10% by weight, based on the weight of rubber-modified styrene thermoplastic resin, because such amounts in accordance with this invention provide improved impact resistance, increased melt flow rate, and better molding heat stability in comparison to compositions which include 10% or more $\alpha$-methylstyrene. In addition and most importantly, the incorporation of no $\alpha$-methylstyrene or less than 10% by weight of $\alpha$-methylstyrene provides improved painted surfaces of the product. Therefore, component A does not contain $\alpha$-methyl-styrene in an amount equal to or greater than 10% by weight. Most preferably, component A contains substantially no $\alpha$-methylstyrene.

Copolymerizable monomers other than aromatic vinyl compounds include cyanized vinyl compounds such as acrylonitrile and methacrylonitrile; methylmethacrylate, N-phenylmaleimide, N-cyclohexylmaleimide, maleic anhydride and methacrylic acid.

Since impact resistance, in general, is promoted to a lesser extent by mere copolymerization of an aromatic vinyl compound with a rubber-modified styrene thermoplastic resin, copolymerization of a cyanized vinyl compound is more preferable. In this instance, a preferable proportion of an aromatic vinyl compound and a cyanized vinyl compound, in terms of % by weight, is in the range of 60-90/10-40, with a particularly preferable range being 65-85/15-35.

Specific examples of the rubber-modified styrene thermoplastic resins meeting these requirements include conventional acrylonitrile-butadiene-styrene resin (ABS resin), acrylonitrile-ethylenepropylene-styrene resin (AES resin), methylmethacrylate-butadiene-styrene resin (MBS resin), acrylonitrile-butadiene-methylmethacrylate-styrene resin (transparent ABS resin) and rubber-modified polystyrene (high-impact polystyrene: HIPS).

The content of rubber in the rubber-modified styrene thermoplastic resin is preferably 5-45% by weight, and particularly preferably 10-30% by weight.

It is desirable that the methyl ethyl ketone soluble component in the rubber-modified styrene thermoplastic resin have an intrinsic viscosity

$$([\eta]_{MEK}^{30°C},$$

unit: dl/g) measured in methyl ethyl ketone at 30°C in the range of 0.2 to 1.2, preferably 0.2 to 1.0, and most preferably 0.3 to 0.9 dl/g.

The rubber component graft ratio of the graft polymer in the rubber-modified styrene thermoplastic resin measured by solvent fractionation using acetone is preferably 10-150%, and particularly preferably 20-100%.

(B) Aromatic polyester:

An example of aromatic polyesters is a condensation product produced by condensation of an aromatic dicarboxylic acid, its ester, or its ester-forming derivative and a diol compound.

Aromatic dicarboxylic acids used in the preparation of such an aromatic polyester include, for example, naphthalene dicarboxylic acids, e.g., naphthalene-2,6-dicarboxylic acid; terephthalic acid, isophthalic acid, p-hydroxybenzoic acid, adipic acid, and sebasic acid, as well as their ester-forming derivatives.

Examples of diols include polymethylene glycol having 2-6 carbon atoms, e.g., ethylene glycol, 1,4-butanediol, 1,6-hexanediol; 1,4-cyclohexanediol, bisphenol A, as well as their ester-forming derivatives.

Specific examples of aromatic polyesters meeting these requirements are polyethylene terephthalate (PET), polybutylene terephthalate (PBT) and bisphenol A isophthalate. Among these, polybutylene terephthalate (PBT) is a preferable aromatic polyester.

An intrinsic viscosity of these aromatic polyesters in o-chlorophenol at 25°C

$$([\eta]_{\text{o-chlorophenol}}^{25°C},$$

unit: dl/g) is in the range of 0.2-1.5, preferably 0.25-1.0, especially preferably 0.3-0.9, and most preferably 0.35-0.8. If the intrinsic viscosity is less than 0.2, the improvement in the painted surface appearance of the resulting resin composition is not as excellent; if more than 1.5, the resin composition does not exhibit as much of an improvement in painted surface appearance and fluidity as is achieved according the present invention.

(C) Aromatic polycarbonate:

As aromatic polycarbonates which may be used in the rubber-modified styrene thermoplastic resin composition of this invention, 4,4'-dihydroxydiphenylalkane-type polycarbonates are particularly preferable. More particularly, preferable polycarbonates are those prepared by an ester exchange or the phosgene method using 2,2-(4,4'-dihydroxydiphenyl)-propane (hereinafter referred to as "bisphenol A"), as a dihydroxy component. Compounds prepared by substituting a part or whole of bisphenol A with other types of 4,4'-dihydroxydiphenylalkane or 4,4'-dihydroxydiphenylether are also preferable.

Among these aromatic polycarbonates, those having a weight average molecular weight ($M_w$) measured by the photo-diffusion method in the range of 10,000 to 80,000 are preferable, with a particularly preferable $M_w$ being in the range of 10,000 to 50,000.

The rubber-modified styrene thermoplastic resin composition of this invention is prepared by blending (A) rubber-modified styrene thermoplastic resin, (B) aromatic polyester, and (C) aromatic polycarbonate. The method for the preparation of this resin will be discussed in more detail.

The rubber-modified styrene thermoplastic resin is compounded in an amount of 75 to 99.8% by weight, preferably 83 to 99.6% by weight, more preferably 87 to 99.4% by weight, and most preferably 93 to 99% by weight, into the composition. If the amount of this component is less than 75% by weight, a further improvement in the external appearance of the painted surface obtained according to the present invention cannot be expected in proportion to the amount of an aromatic polyester. In addition, the fluidity of the resin composition is impaired. An amount exceeding 99.8% by weight does not provide the excellent external appearance of the painted surface achieved according to the present invention.

The aromatic polyester is compounded in an amount of 0.1 to 15% by weight, preferably 0.2 to 10% by weight, more preferably 0.3 to 8% by weight, and most preferably 0.5 to 5% by weight, into the composition of the present invention. If this amount is less than 0.1% by weight, the excellent external appearance of the painted surface obtained according to the present invention is not achieved, while, on the other hand, the superior external appearance of the painted surface achieved according to the present invention is not obtained at an amount exceeding 15% by weight, nor is the excellent fluidity of the paint.

The aromatic polycarbonate is compounded in an amount of 0.1 to 10% by weight, preferably 0.2 to 7% by weight, more preferably 0.3 to 5% by weight, and most preferably 0.5 to 2% by weight, into the composition. If this amount is less than 0.1% by weight, the resulting composition does not have the excellent impact resistance achieved according to the present invention; if more than 10% by weight, the superior external appearance of the painted surfaces achieved according to the present invention is not obtained.

Various methods as well as various blending machines conventionally used in the blending or mixing of thermoplastic resins can be employed for blending the rubber-modified styrene thermoplastic resin, aromatic polyester, and aromatic polycarbonate. Such blending machines include, for example, Banbury mixer, Brabender, Plasto-mill, a kneader, or an extruder with a vent. Among these, the use of an extruder with a vent is especially desirable.

There are no specific limitations to the form of the resins before blending. Any forms, including pellets, beads, powder or flake are acceptable. The blending temperature should be higher than the melting point of the aromatic polyester to be blended. However, since the rubber-modified styrene thermoplastic resin is thermally unstable at a temperature above 300°C, a blending temperature of between 230 and 300°C is desirable.

The preparation of the rubber-modified styrene thermoplastic resin by graft-blending method is advantageous, since it ensures the blending of the 4 components, i.e., graft polymer, styrene-containing

EP 0 474 179 B1

polymer, aromatic polyester, and aromatic polycarbonate, at the same time.

In addition to the above-mentioned essential components, various types of other components and additives can optionally be added to the resin composition of the present invention. Such other components and additives may include, for example, lubricants, antistatic agents, antioxidants, flame retardants, ultraviolet ray absorbing agents, photo-oxidation inhibitors, coloring agents and inorganic fillers (e.g. glass fiber).

Other features of the invention will become apparent in the course of the following description of the exemplary embodiments.

EXAMPLES

In the examples below, all the designation of "part(s)" denotes "parts by weight".
The following thermoplastic resins were used in the examples:

(A) Rubber-modified styrene thermoplastic resin

ABS Resin 1: A graft polymer obtained by the graft polymerization of 40 parts of polybutadiene rubber, 45 parts of styrene, and 15 parts of acrylonitrile, at a graft ratio of 50%; $[\eta]$ = 0.5; 90% of rubber particles having a particle size in the range of 1,500-2,000 angstroms.

ABS Resin 2: A graft polymer obtained by the graft polymerization of 40 parts of polybutadiene rubber, 40 parts of styrene, and 20 parts of acrylonitrile, at a graft ratio of 50%; $[\eta]$ = 0.5; 90% of rubber particles having a particle size in the range of 1,500-2,000 angstroms.

ABS Resin 3: A graft polymer obtained by the graft polymerization of 20 parts of polybutadiene rubber, 36 parts of styrene, 24 parts of acrylonitrile, and 20 parts of $\alpha$-methylstyrene at a graft ratio of 60%; $[\eta]$ = 0.5; 90% of rubber particles having a particle size in the range of 1,500-2,000 angstroms.

AS Resin 1: An AS resin composed of 75 parts of styrene and 25 parts of acrylonitrile. $[\eta]$ = 0.55
AS Resin 2: An AS resin composed of 65 parts of styrene and 35 parts of acrylonitrile. $[\eta]$ = 0.55

(B) Aromatic polyester:

PBT Resin 1:     $[\eta]$ = 0.9, manufactured by Polyplastic Co. Ltd.
PBT Resin 2:     $[\eta]$ = 0.5, manufactured by Polyplastic  Co. Ltd.
PBT Resin 3:     $[\eta]$ = 2.0, manufactured by Polyplastic Co. Ltd.
PET Resin 4:     $[\eta]$ = 0.65, manufactured by Allied Signal Co.
PET Resin 5:     $[\eta]$ = 0.1

(C) Aromatic polycarbonate:

PC Resin:     $M_w$ = 25,900, manufactured by Idemitsu Petrochemical Co., Ltd.

**Examples 1-12, Comparative Examples 1-13**

Thermoplastic resins listed in Tables 1-1 and 1-2 were mixed at a proportion shown in the same tables using a Henschel mixer. The mixture was granulated by an extruder at 210-240°C. The granules were dried at 90°C and injection-molded at 200°C. The izod impact strength, melt-flow rate, molding heat stability of the compositions, and the external appearance of the painted surfaces were evaluated.

The evaluation and measurement of these characteristics were carried out according to the following methods:
(1) Izod impact strength: ASTM D256 (6 mm thickness, with a notch)
(2) Melt-flow rate: ASTM D1238 (220°C, 10 kg)
(3) Painted surface appearance:
    High Urethane No. 5000 (trademark, a product of Japan Oil and Fat Co., Ltd.) was applied onto the surfaces of the molded articles. The surface appearance was visually observed and evaluated according to the following criteria.
    AAA:     Very good
    BBB:     Suction or crazing were observed
    CCC:     Suction or crazing were remarkable

5

(4) Molding heat stability:

The resin compositions were molded by injection at 280°C. Colors of molded resin articles continuously injected and those injected after having been kept in the cylinder at 280°C for 15 minutes were compared. The color differences were taken as a measure of the molding heat stability.

The results are shown in Tables 1-1 and 1-2.

TABLE 1-1

| Components of Thermoplastic Resin Composition (Parts by weight) | Example | | | | | Comparative Example | | | | | |
|---|---|---|---|---|---|---|---|---|---|---|---|
| | 1 | 2 | 3 | 4 | 5 | 1 | 2 | 3 | 4 | 5 | 6 |
| (A) Rubber-modified Styrene Thermoplastic Resin | | | | | | | | | | | |
| ABS Resin 1 | 50 | 50 | 50 | 50 | 50 | 50 | - | 50 | 50 | 50 | 50 |
| ABS Resin 2 | - | - | - | - | - | - | 50 | - | - | - | - |
| AS Resin 1 | 42 | 37 | - | - | - | 50 | - | 27 | 40 | 33 | 39 |
| AS Resin 2 | - | - | 47 | 42 | 45 | - | 50 | - | - | - | - |
| (B) Aromatic Polyester | | | | | | | | | | | |
| PBT Resin 1 | 5 | 10 | - | 5 | - | - | - | 20 | 10 | - | - |
| PBT Resin 2 | - | - | 2 | - | 3 | - | - | - | - | 2 | - |
| PBT Resin 3 | - | - | - | - | - | - | - | - | - | - | 8 |
| (C) Aromatic Polycarbonate | | | | | | | | | | | |
| PC Resin | 3 | 3 | 1 | 3 | 2 | - | - | 3 | 0 | 15 | 3 |
| Characteristics | | | | | | | | | | | |
| Izod Impact Strength | 26 | 28 | 25 | 26 | 27 | 27 | 29 | 25 | 19 | 26 | 27 |
| Melt-flow Rate | 16 | 13 | 13 | 13 | 14 | 17 | 8 | 8 | 12 | 10 | 7 |
| Painted Surface Appearance | AAA | AAA | AAA | AAA | AAA | CCC | BBB | AAA | BBB | CCC | CCC |
| Molding Heat Stability | 7.5 | 7.7 | 9.8 | 10.2 | 9.5 | 7.5 | 16.5 | 14.0 | 7.8 | 7.9 | 7.5 |

6

TABLE 1-2

| Components of Thermoplastic Resin Composition (Parts by weight) | Example | | | | | | | Comparative Example | | | | | | |
|---|---|---|---|---|---|---|---|---|---|---|---|---|---|---|
| | 6 | 7 | 8 | 9 | 10 | 11 | 12 | 7 | 8 | 9 | 10 | 11 | 12 | 13 |
| (A) Rubber-modified Styrene Thermoplastic Resin | | | | | | | | | | | | | | |
| ABS Resin 1 | 40 | 30 | 60 | 40 | 50 | 50 | 50 | 40 | 60 | 40 | 40 | 50 | - | - |
| ABS Resin 2 | - | - | - | - | - | - | - | - | - | - | - | - | - | - |
| ABS Resin 3 | - | - | - | - | - | - | - | - | - | - | - | - | 94.5 | 87 |
| AS Resin 1 | 53 | 63 | 29 | - | 37 | - | - | 55 | - | 18 | 35 | 44 | - | - |
| AS Resin 2 | - | - | - | 53 | - | 44.5 | 44.5 | - | 37 | - | - | - | - | - |
| (B) Aromatic Polyester | | | | | | | | | | | | | | |
| PBT Resin 1 | - | - | - | - | - | 3 | - | - | - | - | - | - | - | - |
| PBT Resin 2 | 5 | 5 | 8 | - | - | - | 4 | - | - | 30 | 5 | - | 4 | 10 |
| PET Resin 4 | - | - | - | 5 | 10 | - | - | - | - | - | - | - | - | - |
| PET Resin 5 | - | - | - | - | - | - | - | - | - | - | - | 3 | - | - |
| (C) Aromatic Polycarbonate | | | | | | | | | | | | | | |
| PC Resin | 2 | 2 | 3 | 2 | 3 | 1.5 | 1.5 | 5 | 3 | 12 | 20 | 3 | 1.5 | 3 |
| Characteristics | | | | | | | | | | | | | | |
| Izod Impact Strength | 18 | 14 | 33 | 20 | 26 | 27 | 25 | 20 | 35 | 20 | 25 | 25 | 16 | 15 |
| Melt-flow Rate | 22 | 30 | 12 | 18 | 10 | 17 | 18 | 21 | 10 | 5 | 8 | 18 | 10 | 8 |
| Painted Surface Appearance | AAA | AAA | AAA | AAA | AAA | AAA | AAA | CCC | CCC | BBB | CCC | CCC | BBB | BBB |
| Molding Heat Stability | 7.0 | 6.5 | 8.0 | 7.2 | 7.5 | 7.9 | 7.7 | 7.3 | 8.2 | 14.0 | 8.5 | 7.5 | 17.5 | 15.0 |

The following conclusions can be derived from the results shown in Tables 1-1 and 1-2.

The data of Examples 1-12 clearly indicate that the compositions of the present invention produce excellent painted surfaces, while maintaining superior izod impact strength, good fluidity, and superb molding heat stability.

The composition of Comparative Example 1, which includes only a conventional ABS resin, produced an extremely poor painted surface.

The composition of Comparative Example 2, which represents a conventional ABS resin in which painted surface improvement was intended by increasing the amount of acrylonitrile to be incorporated, produced only an insufficient painted surface. The composition exhibited remarkably impaired fluidity and molding surface stability.

The composition of Comparative Example 3, in which an aromatic polyester was incorporated in an amount (20 parts) greater than the amount required by the present invention, exhibited remarkably impaired fluidity and molding surface stability.

The composition of Comparative Example 4 represents a composition without incorporation of an aromatic polycarbonate. Not only the izod impact strength of the composition was very poor, but also it produced an inadequate painted surface.

The composition of Comparative Example 5, in which an aromatic polycarbonate was incorporated in an amount (15 parts) greater than the amount required by the present invention, produced a very poor painted surface.

The composition of Comparative Example 6 represents a composition containing an aromatic polyester with an intrinsic viscosity outside the scope defined by the present invention produced a painted surface which was only insufficiently improved. In addition, moldability of the resin composition was poor.

The composition of Comparative Examples 7 and 8 represent compositions without component (B) of the present invention. Their capability of producing an excellent painted surface was poor.

The composition of Comparative Example 9 represents a composition with component (B) being incorporated in an amount more than the amount required by the present invention. It produced a poor painted surface and exhibited impaired molding heat stability.

The composition of Comparative Example 10 contained component (C) in an amount more than the amount required by the present invention. It produced a poor painted surface and its melt-flow characteristic was inadequate.

The composition of Comparative Example 11 represents a product using component (B) with an intrinsic viscosity outside the defined range. It could not produce a good looking painted surface when a paint was coated on its surface.

The composition of Comparative Example 12 represents a product containing 20% by weight of $\alpha$-methylstyrene in component (A). The product exhibited poor impact resistance and low melt flow rate. Its molding heat stability was inadequate. In addition, the appearance of the painted surface was unacceptable.

As illustrated above and demonstrated by the examples, the thermoplastic resin composition of the present invention in which small amounts of a specific aromatic polyester and a specific aromatic polycarbonate are incorporated provides a painted surface with a superior appearance when a paint is applied on its surface, while maintaining its excellent fluidity, impact resistance, and molding heat stability. The composition is thus very useful in industries.

**Claims**

1. A thermoplastic resin composition comprising:
   (A) 75 to 99.8% by weight of a rubber-modified styrene thermoplastic resin,
   (B) 0.1 to 15% by weight of an aromatic polyester having an intrinsic viscosity in the range of 0.2 to 1.5 dl/g, and
   (C) 0.1 to 10% by weight of an aromatic polycarbonate, the composition containing no $\alpha$-methylstyrene or less than 10% by weight of $\alpha$-methylstyrene based on the amount of said rubber-modified styrene thermoplastic resin.

2. The thermoplastic resin composition according to Claim 1, wherein at least 50% of the particles of the rubber components in said rubber-modified styrene thermoplastic resin have a particle size in the range of 1,200-2,500 angstroms.

3. The thermoplastic resin composition according to Claim 1, wherein a rubber content of said rubber-modified styrene thermoplastic resin is 5 to 45% by weight.

4. The thermoplastic resin composition according to Claim 1, wherein a methyl ethyl ketone soluble component in said rubber-modified styrene thermoplastic resin has an intrinsic viscosity in the range of 0.2 to 1.2 dl/g.

5. The thermoplastic resin composition according to Claim 1, wherein said aromatic polyester is a condensation product produced by condensation of an aromatic dicarboxylic acid, its ester, or its ester-forming derivative and a diol compound.

6. The thermoplastic resin composition according to Claim 5, wherein said aromatic dicarboxylic acid is selected from the group consisting of naphthalene-2,6-dicarboxylic acid, terephthalic acid, isophthalic acid, p-hydroxybenzoic acid, adipic acid, and sebasic acid.

7. The thermoplastic resin composition according to Claim 5, wherein said diol is selected from the group consisting of ethylene glycol, 1,4-butanediol, 1,6-hexanediol, 1,4-cyclohexanediol and bisphenol A.

8. The thermoplastic resin composition according to Claim 1, wherein said aromatic polycarbonate has a weight average molecular weight in the range of 10,000 to 80,000.

9. The thermoplastic resin composition according to Claim 1, wherein said aromatic polyester has an intrinsic viscosity in the range of 0.25 to 1.0 dl/g.

10. The thermoplastic resin composition according to Claim 1, wherein said aromatic polyester has an intrinsic viscosity in the range of 0.3 to 0.9 dl/g.

11. The thermoplastic resin composition according to Claim 1, wherein said rubber-modified styrene thermoplastic resin contains substantially no α-methylstyrene.

12. A thermoplastic resin composition according to Claim 1 comprising:
(A) 83 to 99.6% by weight of a rubber-modified styrene thermoplastic resin,
(B) 0.2 to 10% by weight of an aromatic polyester having an intrinsic viscosity in the range of 0.2 to 1.5 dl/g, and
(C) 0.2 to 7% by weight of an aromatic polycarbonate, the composition containing no α-methylstyrene or less than 10% by weight of α-methylstyrene based on the amount of said rubber-modified styrene thermoplastic resin.

13. A thermoplastic resin composition according to Claim 1 comprising:
(A) 87 to 99.4% by weight of a rubber-modified styrene thermoplastic resin,
(B) 0.3 to 8% by weight of an aromatic polyester having an intrinsic viscosity in the range of 0.2 to 1.5 dl/g, and
(C) 0.3 to 5% by weight of an aromatic polycarbonate, the composition containing no α-methylstyrene or less than 10% by weight of α-methylstyrene based on the amount of said rubber-modified styrene thermoplastic resin.

14. A thermoplastic resin composition according to Claim 1 comprising:
(A) 93 to 99% by weight of a rubber-modified styrene thermoplastic resin,
(B) 0.5 to 5% by weight of an aromatic polyester having an intrinsic viscosity in the range of 0.2 to 1.5 dl/g, and
(C) 0.5 to 2% by weight of an aromatic polycarbonate, the composition containing no α-methylstyrene or less than 10% by weight of α-methylstyrene based on the amount of said rubber-modified styrene thermoplastic resin.

**Patentansprüche**

1. Thermoplastische Harzzusammensetzung, umfassend:
(A) 75 bis 99,8 Gew.-% eines kautschukmodifizierten thermoplastischen Styrolharzes,
(B) 0,1 bis 15 Gew.-% eines aromatischen Polyesters mit einer Strukturviskosität im Bereich von 0,2 bis 1,5 dl/g und
(C) 0,1 bis 10 Gew.-% eines aromatischen Polycarbonats, wobei die Zusammensetzung kein α-Methylstyrol oder weniger als 10 Gew.-% α-Methylstyrol, bezogen auf die Menge des kautschukmodifizierten thermoplastischen Styrolharzes, enthält.

2. Thermoplastische Harzzusammensetzung gemäß Anspruch 1, wobei mindestens 50% der Teilchen der Kautschukkomponenten in dem kautschukmodifizierten thermoplastischen Styrolharz eine Teilchengröße von 1 200-2 500 Angström aufweisen.

3. Thermoplastische Harzzusammensetzung gemäß Anspruch 1, wobei ein Kautschukgehalt des kautschukmodifizierten thermoplastischen Styrolharzes 5 bis 45 Gew.-% beträgt.

4. Thermoplastische Harzzusammensetzung gemäß Anspruch 1, wobei eine in Methylethylketon lösliche Komponente in dem kautschukmodifizierten thermoplastischen Styrolharz eine Strukturviskosität im Bereich von 0,2 bis 1,2 dl/g aufweist.

**5.** Thermoplastische Harzzusammensetzung gemäß Anspruch 1, wobei der aromatische Polyester ein Kondensationsprodukt ist, erzeugt durch Kondensation von einer aromatischen Dicarbonsäure, deren Ester, oder deren esterbildendem Derivat und einer Diolverbindung.

**6.** Thermoplastische Harzzusammensetzung gemäß Anspruch 5, wobei die aromatische Dicarbonsäure ausgewählt ist aus der Gruppe, bestehend aus Naphthalin-2,6-dicarbonsäure, Terephthalsäure, Isophthalsäure, p-Hydroxybenzoesäure, Adipinsäure und Sebacinsäure.

**7.** Thermoplastische Harzzusammensetzung gemäß Anspruch 5, wobei das Diol ausgewählt ist aus der Gruppe, bestehend aus Ethylenglycol, 1,4-Butandiol, 1,6-Hexandiol, 1,4-Cyclohexandiol und Bisphenol A.

**8.** Thermoplastische Harzzusammensetzung gemäß Anspruch 1, wobei das aromatische Polycarbonat ein durchschnittliches Molekulargewicht (Gew.-Mittel) im Bereich von 10 000 bis 80 000 aufweist.

**9.** Thermoplastische Harzzusammensetzung gemäß Anspruch 1, wobei der aromatische Polyester eine Strukturviskosität im Bereich von 0,25 bis 1,0 dl/g aufweist.

**10.** Thermoplastische Harzzusammensetzung gemäß Anspruch 1, wobei der aromatische Polyester eine Strukturviskosität im Bereich von 0,3 bis 0,9 dl/g aufweist.

**11.** Thermoplastische Harzzusammensetzung gemäß Anspruch 1, wobei das kautschukmodifizierte thermoplastische Styrolharz im wesentlichen kein $\alpha$-Methylstyrol enthält.

**12.** Thermoplastische Harzzusammensetzung gemäß Anspruch 1, umfassend:
(A) 83 bis 99,6 Gew.-% eines kautschukmodifizierten thermoplastischen Styrolharzes,
(B) 0,2 bis 10 Gew.-% eines aromatischen Polyesters mit einer Strukturviskosität im Bereich von 0,2 bis 1,5 dl/g und
(C) 0,2 bis 7 Gew.-% eines aromatischen Polycarbonats, wobei die Zusammensetzung kein $\alpha$-Methylstyrol oder weniger als 10 Gew.-% $\alpha$-Methylstyrol, bezogen auf die Menge des kautschukmodifizierten thermoplastischen Styrolharzes, enthält.

**13.** Thermoplastische Harzzusammensetzung gemäß Anspruch 1, umfassend:
(A) 87 bis 99,4 Gew.-% eines kautschukmodifizierten thermoplastischen Styrolharzes,
(B) 0,3 bis 8 Gew.-% eines aromatischen Polyesters mit einer Strukturviskosität im Bereich von 0,2 bis 1,5 dl/g und
(C) 0,3 bis 5 Gew.-% eines aromatischen Polycarbonats, wobei die Zusammensetzung kein $\alpha$-Methylstyrol oder weniger als 10 Gew.-% $\alpha$-Methylstyrol, bezogen auf die Menge des kautschukmodifizierten thermoplastischen Styrolharzes, enthält.

**14.** Thermoplastische Harzzusammensetzung gemäß Anspruch 1, umfassend:
(A) 93 bis 99 Gew.-% eines kautschukmodifizierten thermoplastischen Styrolharzes,
(B) 0,5 bis 5 Gew.-% eines aromatischen Polyesters mit einer Strukturviskosität im Bereich von 0,2 bis 1,5 dl/g und
(C) 0,3 bis 2 Gew.-% eines aromatischen Polycarbonats, wobei die Zusammensetzung kein $\alpha$-Methylstyrol oder weniger als 10 Gew.-% $\alpha$-Methylstyrol, bezogen auf die Menge des kautschukmodifizierten thermoplastischen Styrolharzes, enthält.

**Revendications**

**1.** Composition de résine thermoplastique comprenant :
(A) 75 à 99,8% en poids d'une résine thermoplastique de styrène modifiée par un caoutchouc ;
(B) 0,1 à 15% en poids d'un polyester aromatique ayant une viscosité intrinsèque se situant dans la plage de 0,2 à 1,5 dl/g ; et
(C) 0,1 à 10% en poids d'un polycarbonate aromatique,
la composition ne contenant pas d'$\alpha$-méthylstyrène ou moins de 10% en poids d'$\alpha$-méthylstyrène sur la base de la quantité de ladite résine thermoplastique de styrène modifiée par un caoutchouc.

2. Composition de résine thermoplastique selon la revendication 1, dans laquelle au moins 50% des particules des composants du caoutchouc dans ladite résine thermoplastique de styrène modifiée par du caoutchouc ont une dimension de particule se situant dans la plage de 1200 - 2500 angströms.

3. Composition de résine thermoplastique selon la revendication 1, dans laquelle la teneur en caoutchouc de ladite résine thermoplastique de styrène modifiée par un caoutchouc est de 5 à 45% en poids.

4. Composition de résine thermoplastique selon la revendication 1, dans laquelle un composant soluble dans la méthyl éthyl cétone dans ladite résine thermoplastique de styrène modifiée par un caoutchouc a une viscosité intrinsèque se situant dans la plage de 0,2 à 1,2 dl/g.

5. Composition de résine thermoplastique selon la revendication 1, dans laquelle ledit polyester aromatique est un produit de condensation, obtenu par condensation d'un acide dicarboxylique aromatique, d'un ester d'un tel acide, ou d'un dérivé d'un tel acide formant un ester, et d'un composé diol.

6. Composition de résine thermoplastique selon la revendication 5, dans laquelle ledit acide dicarboxylique aromatique est choisi dans le groupe constitué par l'acide naphtalène-2,6-dicarboxylique, l'acide téréphtalique, l'acide isophtalique, l'acide p-hydroxybenzoïque, l'acide adipique et l'acide sébacique.

7. Composition de résine thermoplastique selon la revendication 5, dans laquelle ledit diol est choisi dans le groupe constitué par l'éthylène glycol, le 1,4-butane diol, le 1,6-hexane diol, le 1,4-cyclohexane diol et le bisphénol A.

8. Composition de résine thermoplastique selon la revendication 1, dans laquelle ledit polycarbonate aromatique a une masse moléculaire moyenne en poids se situant dans la plage de 10 000 à 80 000.

9. Composition de résine thermoplastique selon la revendication 1, dans laquelle ledit polyester aromatique a une viscosité intrinsèque se situant dans la plage de 0,25 à 1,0 dl/g.

10. Composition de résine thermoplastique selon la revendication 1, dans laquelle ledit polyester aromatique a une viscosité intrinsèque se situant dans la plage de 0,3 à 0,9 dl/g.

11. Composition de résine thermoplastique selon la revendication 1, dans laquelle ladite résine thermoplastique de styrène modifiée par un caoutchouc ne contient pratiquement pas d'α-méthylstyrène.

12. Composition de résine thermoplastique selon la revendication 1, comprenant :
    (A) 83 à 99,6% en poids d'une résine thermoplastique de styrène modifiée par un caoutchouc ;
    (B) 0,2 à 10% en poids d'un polyester aromatique ayant une viscosité intrinsèque se situant dans la plage de 0,2 à 1,5 dl/g ; et
    (C) 0,2 à 7% en poids d'un polycarbonate aromatique,
    la composition ne contenant pas d'α-méthylstyrène ou moins de 10% en poids d'α-méthylstyrène sur la base de la quantité de ladite résine thermoplastique de styrène modifiée par un caoutchouc.

13. Composition de résine thermoplastique selon la revendication 1, comprenant :
    (A) 87 à 99,4% en poids d'une résine thermoplastique de styrène modifiée par un caoutchouc ;
    (B) 0,3 à 8% en poids d'un polyester aromatique ayant une viscosité intrinsèque se situant dans la plage de 0,2 à 1,5 dl/g ; et
    (C) 0,3 à 5% en poids d'un polycarbonate aromatique,
    la composition ne contenant pas d'α-méthylstyrène ou moins de 10% en poids d'α-méthylstyrène sur la base de la quantité de ladite résine thermoplastique de styrène modifiée par un caoutchouc.

14. Composition de résine thermoplastique selon la revendication 1, comprenant :
    (A) 93 à 99% en poids d'une résine thermoplastique de styrène modifiée par un caoutchouc ;
    (B) 0,5 à 5% en poids d'un polyester aromatique ayant une viscosité intrinsèque se situant dans la plage de 0,2 à 1,5 dl/g ; et
    (C) 0,5 à 2% en poids d'un polycarbonate aromatique,
    la composition ne contenant pas d'α-méthylstyrène ou moins de 10% en poids d'α-méthylstyrène sur la base de la quantité de ladite résine thermoplastique de styrène modifiée par un caoutchouc.